(19) **Europäisches Patentamt European Patent Office Office européen des brevets**

(11) **EP 4 408 749 B1**

(12) **EUROPEAN PATENT SPECIFICATION**

(45) Date of publication and mention
of the grant of the patent:
**15.04.2026 Bulletin 2026/16**

(21) Application number: **23731240.0**

(22) Date of filing: **06.06.2023**

(51) International Patent Classification (IPC):
***B64G 1/24*** *(2006.01)*

(52) Cooperative Patent Classification (CPC):
**B64G 1/244; B64G 1/245; B64G 1/247**

(86) International application number:
**PCT/EP2023/065146**

(87) International publication number:
**WO 2023/242003 (21.12.2023 Gazette 2023/51)**

(54) **HYBRID ONLINE POLICY ADAPTATION STRATEGY FOR ATTITUDE POINTING PERFORMANCE**

ONLINE HYBRID ANPASSUNGSSTRATEGIE FÜR SATELLITENORIENTIERUNG

STRUCTURE EN LIGNE D'ADAPTATION HYBRIDE POUR L'ORIENTATION D'UN SATELLITE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.06.2022 EP 22290039**

(43) Date of publication of application:
**07.08.2024 Bulletin 2024/32**

(73) Proprietors:
• **Airbus Defence and Space SAS**
**78133 Les Mureaux Cedex (FR)**
• **Airbus Defence and Space Limited**
**Stevenage, Hertfordshire SG1 2AS (GB)**
• **Airbus Defence and Space GmbH**
**82024 Taufkirchen (DE)**

(72) Inventors:
• **PASSARIN, Federico**
**Stevenage SG1 2AS (GB)**
• **WATT, Mark**
**Stevenage SG1 2AS (GB)**
• **GARCÍA, Carlos Hervás**
**82024 Taufkirchen (DE)**

• **LACHEVRE, Pierre**
**31400 Toulouse (FR)**

(74) Representative: **Varley, James Richard et al**
**Venner Shipley LLP**
**200 Aldersgate**
**London EC1A 4HD (GB)**

(56) References cited:
**WO-A1-2021/074910      US-A1- 2017 336 807**

• SU RUIPENG ET AL: "Deep reinforcement learning method based on DDPG with simulated annealing for satellite attitude control system", 2019 CHINESE AUTOMATION CONGRESS (CAC), IEEE, 22 November 2019 (2019-11-22), pages 390 - 395, XP033712057, DOI: 10.1109/CAC48633.2019.8996860
• REN LILI ET AL: "Hierarchical Reinforcement-Learning for Real-Time Scheduling of Agile Satellites", IEEE ACCESS, IEEE, USA, vol. 8, 26 November 2020 (2020-11-26), pages 220523 - 220532, XP011826381, DOI: 10.1109/ACCESS.2020.3040748

## Description

### Field

This specification relates to systems, methods and apparatus for controlling a satellite using machine-learning models, and the training of such machine-learning models. In particular, this specification relates to machine-learning models trained using metaheuristic optimisation algorithms in a reinforcement learning setup.

### Background

Reinforcement learning systems interact with an environment to learn. The need to explore - in other words, repeatedly try new actions -may take the system into unsafe situations. Consequently, reinforcement learning agents are often trained in a safe proxy of the real system, either in a well-controlled environment in a laboratory, or more commonly, in simulations. The latter, referred to as "offline reinforcement learning", consists in repeating an exercise in simulation an arbitrarily large number of times. It is extremely common given how sample inefficient reinforcement learning can be (in other words, it often needs a prohibitively large number of interactions with the environment to learn). This opens a new problem however, which is how to ensure the trained policy still performs as expected on the real system - the so called "domain transfer problem". In satellite systems, this problem becomes particularly acute, as a satellite may be subject to time-varying dynamics and conditions that are not accounted for during offline training.

Furthermore, many modern RL methods (policy gradient based) have a high memory usage and/or require significant processing power, in part due to the requirement to store state-action-reward time series. This can limit the ability to deploy RL techniques in satellites, which have constrained memory spaces and/or processing power.

US 2017/336807 A1 discloses an attitude control system that includes a controller which is used to control gyro pairs. The controller may be adaptive controller that employs machine learning.

"Deep reinforcement learning method based on DDPG with simulated annealing for satellite attitude control system" (R. Su et al., 2019 Chinese Automation Congress (CAC), Hangzhou, China, 2019, pp. 390-395) discloses a deep reinforcement learning algorithm based on DDPG for a satellite attitude control system.

"Hierarchical Reinforcement-Learning for Real-Time Scheduling of Agile Satellites" (L. Ren et al., IEEE Access, vol. 8, pp. 220523-220532) discloses a reinforcement learning algorithm for Earth observation satellite (EOS) scheduling.

### Summary

According to a first aspect of this specification there is described a computer implemented method for controlling a satellite comprising: for at least one machine learning model for controlling at least the attitude of the satellite controlling a satellite for an episode of time using said machine-learning model. The controlling comprises: computing, by one or more processors of the satellite, the nominal control command for the satellite from data representing a current attitude state of the satellite using said predefined nominal control model; generating, by the one or more processors and using said machine learning model, one or more corrections to said nominal control command using the current attitude state of the satellite and said nominal control command; generating, by the one or more processors, an improved control command by applying said correction to said nominal control command; and controlling the satellite based on said improved control command. The method further comprises evaluating, by the one or more processors, a performance of the improved control commands for said episode of time using a reward function providing rewards; and after each episode of time, updating, by the one or more processors, said machine learning model based on the rewards, wherein updates are determined using a metaheuristic optimisation algorithm.

The method may further comprise a run-time assurance strategy, the run-time assurance strategy comprising: monitoring the current attitude state of the satellite and/or said performance for at least one dangerous state beyond predefined acceptable states; and in response to detecting said dangerous state, switching control of the satellite to a verified mode in which the satellite is directly controlled by said nominal control command in a verified control model in which the aforementioned machine learning model is disabled.

The metaheuristic optimisation algorithm may be an evolution strategy algorithm.

The metaheuristic optimisation algorithm comprises: generating a plurality of sets of parameters for the at least one machine learning model from a distribution of model parameters, each set of parameters corresponding to a distinct variation of the at least one machine learning model; determining a plurality of best performing variations of the at least one machine learning model; determining an average set of parameters of the best performing variations of the at least one machine learning model; updating the distribution of model parameters based on the determined average set of parameters; and sampling an updated plurality of sets of parameters of the at least one machine learning model from the updated distribution.

The distribution of model parameters is based on a step size describing the size of the distribution and a covariance matrix describing the shape of the distribution. Updating the distribution of model parameters may further comprise updating the step size based on the best performing variations of the at least one machine learning model. Updating the distribution of model parameters may further comprise applying a decay to the step size based on a decay parameter.

The reward may penalise fast changes in one or more attitude state variables of the satellite.

The machine-learning model may be a non-gated recurrent neural network. The non-gated recurrent neural network may comprise one or more higher order recurrent neural network layers. The one or more higher order recurrent neural network layers may be followed by one or more fully connected layers.

Evaluating the performance of the improved control commands for the episode using a reward function providing rewards may be based at least in part on an attitude state of the satellite comprising one or more of: an attitude and/or a roll rate of at least a part of the satellite. The reward function may be given by:

$$r = \begin{cases} 1 - \alpha|\dot{\theta}|, & |\theta| \leq \theta_{max} \\ 0, & |\theta| \geq \theta_{max} \end{cases}$$

where $\theta$ is an attitude of the satellite, $\theta_{max}$ is a threshold attitude and $\alpha$ is a constant.

According to a further aspect of this specification, there is described a method of controlling a satellite, the method comprising: generating, by one or more processors, one or more nominal control commands for the satellite from data representing a current state of the satellite using a nominal control model; generating, by the one or more processors, one or more adjustments to the one or more nominal control commands from the current attitude state of the satellite and the one or more nominal control commands using the machine learning model; generating, by the one or more processors, one or more improved control commands by applying the one or more adjustments to the one or more nominal control commands; and controlling the satellite based on the one or more improved control commands. The machine learning model may have been trained using any of the training methods disclosed herein.

According to a further aspect of this specification, there is described a computer implemented system for controlling a global attitude of a satellite comprising at least one predefined nominal control model able to generate a nominal control command which is operational for controlling at least the attitude of the satellite, wherein the system further comprises one machine learning model. For at least one episode of time: one or more processors of the satellite are able to compute the nominal control command for the satellite, from data representing a current attitude state of the satellite, using said predefined nominal control model; the one or more processors and said machine learning model, are able to generate one or more corrections to said nominal control command, from the current attitude state of the satellite and said nominal control command; the one or more processors are able to generate an improved control command by applying said correction to said nominal control command, the improved control command being used for controlling the satellite; and the one or more processors are able to evaluate a performance of the improved control commands, for said episode of time, using a reward function providing rewards. After each episode of time, the one or more processors is able to update said machine learning model based on the rewards, wherein updates are determined using a metaheuristic optimisation algorithm.

According to a further aspect of this specification, there is described a satellite according to claim 11.

According to a further aspect of this specification, there is described a computer program product according to claim 12.

## Brief Description of the Drawings

FIG. 1 shows an overview of a method of controlling a system/plant (e.g. spacecraft attitude), aided by an agent comprising a machine-learning model;

FIG. 2 shows a schematic overview of a method of training a machine-learning model, or agent using an evolution strategy;

FIG. 3 shows a schematic overview of an evolution strategy for training machine-learning models;

FIG. 4 shows a schematic overview of an example method of runtime assurance;

FIG. 5 shows a flow diagram of an example method for training a machine-learning model to adapt control signals coming from a nominal control model;

FIG. 6 shows a flow diagram of an example method of controlling a system using a machine-learning model; and

FIG. 7 shows a schematic example of a system/apparatus for performing any of the methods described herein.

**Detailed Description**

This specification describes systems and methods for controlling the attitude of a satellite (e.g. the global attitude) in a way that improves over time. The attitude control method evolves over time in order to optimise pointing performance of the satellite. The approaches described herein allow for several problems to be solved. These include: (i) dealing with an unknown or poorly understood system or system perturbations. Due to the fact that the Attitude and Orbit Control System (AOCS) is designed before flight, models have to be employed to design current industrial solutions. These models are sometimes not accurate enough to predict the system behaviour precisely during flight; (ii) dealing with time-varying dynamics. Most commonly used attitude control solutions rely on fixed control laws and therefore do not adapt well to time-varying effects, such as reaction wheel friction level changes or thruster efficiency losses; and (iii) excessive conservativeness in attitude control solutions. Industrial attitude controllers are designed to be robust to all considered uncertainty in the dynamics of the spacecraft; the robustness obtained comes at the significant price of performance loss.

Reinforcement Learning (RL) is one of the three core paradigms of modern machine learning, alongside Supervised Learning and Unsupervised Learning. The core idea behind RL is that an agent learns to take the best decision regarding which action to take from observations it receives during successive interactions with an environment, simulated or otherwise, that it can observe fully or partially. To evaluate its actions, the agent receives a reward (which can also be negative, meaning it is a penalty at each time step). During the learning phase, the agent will attempt to maximize a cumulative sum of such rewards, which may sometimes be weighted by a discount factor when the time horizon is infinite. The environment itself can be deterministic or non-deterministic (i.e. the same action in the same state does not always result in the same outcome).

An important notion in RL is exploration, and more broadly the exploration vs exploitation trade off. In order to collect more knowledge about a problem, an agent needs to see many states. If not, the agent might find it more comfortable to keep exploiting its current best policy, which could cause it to miss interesting and/or more optimal strategies. Exploration should therefore be encouraged to some degree, but random exploration is also not efficient as problem spaces are generally too large and this can cause the agent to obtain valuable rewards rarely. This is especially important in the context of online RL in satellites, where each episode requires risky and costly real interactions with the environment.

To mitigate this, the system and methods disclosed herein use online reinforcement learning to learn a machine-learning model for applying modifications to the output of a known robust controller for a satellite. As such, the goal is not to learn to control the satellite using only the machine-learning model, but to improve performance of a baseline robust control system and/or to adapt to unforeseen perturbations.

Furthermore, metaheuristic optimisation algorithms (e.g. population based optimisation algorithms, such as evolution strategy algorithms) are used for online deep reinforcement learning instead of the usual gradient-based methods. Such strategies have comparable converged performance and training times to gradient-based methods when used for RL, but have significantly lower memory footprints, as they do not rely on saving state-action-reward time series. Consequently, the use of these strategies makes feasible the application of online RL techniques to satellite control, given the low amount of available memory and processing power generally available on a satellite.

Additionally, evolution strategies can optimize non-gated recurrent neural networks, such as higher order recurrent neural networks. This is not the case for gradient-based approaches, such as policy gradient algorithms.

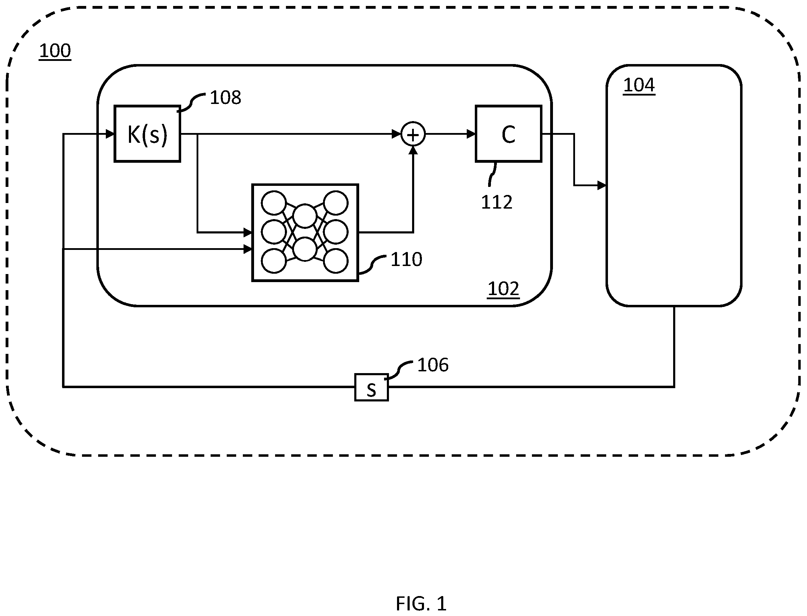

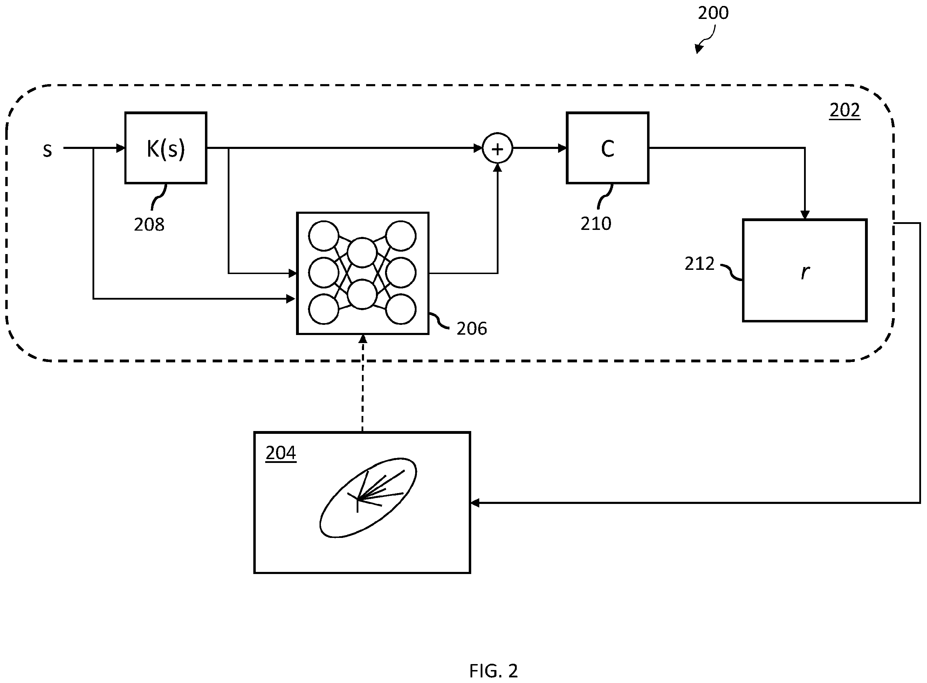

FIG. 1 shows a schematic overview of a method 100 for controlling a system/plant (e.g. a satellite) using a machine-learning model. The machine-learning model 102 may have been trained using any of the reinforcement learning methods described below in relation to FIG. 2. The system 100 forms part of a satellite, e.g. a subsystem of the satellite.

The method 100 uses a hybrid controller 102 and an AOCS plant to be controlled 104 (alongside the necessary actuators, sensors and estimators). The hybrid controller 102 is configured to generate control commands for controlling the (global) attitude state of the satellite 106 of the satellite. The control commands comprise, in some examples, control signals/commands for one or more actuators (e.g. a plurality of actuators), i.e. controls for whichever actuators are required to adjust the global attitude of the satellite. The subsystem 104 represents the AOCS plant alongside the necessary actuators and sensors, and it is configured to receive the control commands from the hybrid controller 102 and to control the satellite based on them.

It will be appreciated that the hybrid controller 102 and a control sub-system 104 may form part of the same sub-system of the system, or may form separate sub-systems of the system, as shown.

The hybrid controller 102 comprises a nominal control model 108, K. The nominal control model 108 receives as input the current state of the satellite 106, s, (e.g. an attitude state and sometimes other inputs, such as rate) and processes it to determine one or more nominal control commands. The one or more nominal control commands and the current attitude state of the system 106 are input into a machine-learning model 110, which processes them to determine a set of adjustments for the one or more control commands. The determined adjustments are applied to the one or more nominal control commands to generate one or more improved control commands 112, C (which may also be referred to as "effective control commands" and/or "adapted control commands"). The one or more improved control commands 112 is output from the hybrid controller 102 for use by the control sub-system 104 to control the satellite.

The attitude state 106 of the satellite represents the current orientation of the satellite in its environment. The attitude state includes the attitude, $\theta$, (generally in the form of an attitude error, i.e. the difference between a reference orientation and the current value), and the angular rate (i.e. the derivative of the attitude with respect to time). The attitude state 106 may, in some embodiments, further comprise additional configuration data of the satellite to provide additional context when generating the control signals. Examples of such configuration data include position and/or velocity data, power distribution data, power usage data, gravitational and/or electromagnetic field strength measurements or the like. Many other examples are possible. This RL technique can also be applied to systems with other forms of nominal controller.

The attitude state 106 may be derived from sensor data captured by sensors present on the satellite or associated with the satellite. Such sensors may include, but are not limited to, gyroscopic sensors, optical sensors, magnetic sensors or the like.

The machine-learning model 110 may comprise one or more neural networks. Neural networks make no prior assumptions about the underlying dynamics of the satellite and environment, and hence can learn novel strategies in new situations. Their architecture is very versatile and can learn a very large range of functions (any in fact, assuming a large enough network is used). Furthermore, non-linear policies can be learned by the neural network.

The neural network may comprise one or more fully connected layers, in which each node in the layer is connected to every node in the preceding neural network layer.

The neural network may comprise a recurrent neural network. The recurrent neural network may be a gated or non-gated recurrent neural network. For example, the recurrent neural network may comprise a long short-term memory (LSTM) network. Alternatively, the recurrent neural network may comprise a higher order recurrent neural network (HORNN). A HORNN is a non-gated recurrent neural network with a few time steps of memory. In some embodiments, the recurrent HORNN unit may be followed by one or more fully connected layers. Examples of a HORNN are described in "Higher Order Recurrent Neural Networks" (R. Sultana et al., arXiv 1605.00064).

The structure of a HORNN may be defined by the number of time steps of memory the HORNN has (also referred to as the "order" of the HORNN), the number of HORNN layers in the network and/or the size of each HORNN layer. The order used can depend at least in part on the problem the HORNN is being applied to. Typically, the higher the complexity of the time dependencies in the problem, the higher the order used. In some implementations, the order may be between 4 and 12, for example 8. The number of HORNN layers may be between 1 and 5. In some implementations, a single HORNN layer is used. The size of each HORNN layer may be between 8 and 32, for example 16.

In some embodiments, the inputs to the neural network are scaled prior to input into the network. For example, the inputs may be scaled to lie in the range [-1, 1].

The nominal control model 108 can be any robust controller able to stabilise the satellite. Examples of such models include, but are not limited to, Proportional Integral Derivative (PID) controllers, high order state space controllers, Linear Quadratic Regulators (LQR).

FIG. 2 shows a schematic overview of a method 200 of training a machine-learning model to control a satellite using an evolution strategy. The method 200 is a reinforcement learning method based on a metaheuristic optimisation algorithm, e.g. a population based method such as an evolutionary strategy. Other metaheuristic algorithms may be considered, including but not limited to genetic algorithms, differential evolution, particle swarm optimisation.

The goal of the method is to learn on an in-flight satellite. Consequently, it is unfeasible to start learning from scratch, the satellite needs to behave in a safe way from the start. As such, the hybrid architecture of FIG. 1 is used in which the machine-learning model output is a correction (e.g. an additive correction) to a known robust controller able to stabilize the satellite. As such, the goal of is not to learn to control the system using only the machine-learning model but to improve performance of a baseline robust control and/or to adapt to unforeseen perturbations.

The method 200 is an iterative training method. Each iteration of the training method is divided into an evaluation phase 202 and an evolution phase 204. The evaluation phase 202 evaluates the performance of each of a plurality of sets of parameters of the machine-learning model (i.e. a population of sets of parameters) on the task of generating adjustments to output of a robust controller. The sets of parameters may, for example, be weights and/or biases of a neural network. The evolution phase 204 updates the population of machine learning models based on the results of the evaluation phase using an evolution strategy.

The evaluation phase 202 is divided into a plurality of episodes, each corresponding to a period of time. Each episode may comprise a plurality of time steps. During each episode, an instance of the machine-learning model 206 using a set of parameters from a population sets of parameters for the current generation is used to modify control signals output by a nominal control model 208, as described in relation to FIG. 1. A different set of parameters of the machine-learning model 206 from the population may be used for each episode. In some embodiments, the length of an episode is chosen such that it is significantly greater than the closed loop system time constant.

At each time step in an episode, a current attitude state of the satellite, s, is used by the nominal control model 208 to generate one or more nominal control commands, e.g. a first/initial set of control parameters. The one or more nominal control commands and the current attitude state of the system are input into the machine-learning model 206, which generates adjustments to the control signals for the time step. In some embodiments, the attitude states and/or one or more nominal control commands of a predetermined number of previous time steps may also be input into the machine-learning model 206.

The adjustments generated by the machine-learning model 206 are applied to the one or more nominal control commands to generate one or more improved control commands, e.g. a second/modified set of control parameters, C, 210.

The one or more improved control commands 210 generated during an episode (i.e. the second sets of control signals) are used to control the satellite. The effects of these control commands on the satellite (e.g. the updated attitude states of the satellite following application of the control signals) are evaluated 212 by determining a reward, r, for the set of parameters of the machine-learning model each time step. The episode return refers to the cumulative reward over a single episode.

The reward value for an episode is based on the task the machine-learning model is being trained to perform. The reward value will be higher when the machine-learning model causes the satellite to be in a desirable state (e.g. a stable attitude or slowly varying state) than when the satellite is put into an undesirable state (e.g. an unstable state). For example, the reward value may penalise fast changes in one or more of the parameters defining the attitude state of the satellite in order to prevent rapid changes in the satellite state that may lead to instabilities. The reward value may alternatively or additionally penalise large deviations in attitude parameter values from a desired state of the satellite.

For example, the reward may penalise fast changes in the attitude of the satellite and/or large deviations from a desirable attitude (e.g. an attitude error). An example of such a reward may be given by:

$$r = \begin{cases} 1 - \alpha|\dot{\theta}| & |\theta| < \theta_{max} \\ 0 & |\theta| \geq \theta_{max} \end{cases}$$

where $\theta$ is the attitude of the satellite measured from an ideal attitude (i.e. an attitude error), $\theta_{max}$ is a threshold attitude error and $\alpha$ is a problem-specific constant.

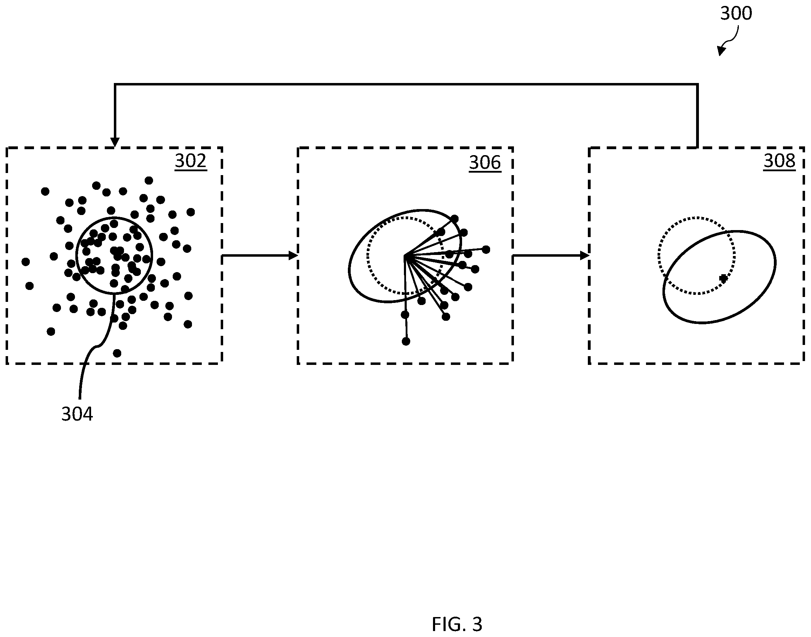

Once a respective episode return has been determined for each set of parameters of the machine-learning model in the population of sets of parameters, the evolution phase 204 updates the population of machine learning model parameter sets using the determined rewards. An evolution strategy may be used to sample updated sets of parameters, x, for the machine-learning model to generate an updated population of machine-leaning model parameter sets. Examples of evolution strategies are described below in relation to FIG. 3.

Metaheuristic optimisation algorithms, such as evolution strategies are examples of "black box", gradient free optimization algorithms. Evolution strategies are useful because they do not use assumptions about the function to optimize. In all cases, evolution strategies attempt to find function optima through successive sampling of a new population using a normal distribution. Each member of the population is evaluated against the function being optimised and the results obtained are used to update the distribution to be used for generating the next set of samples (referred to as the next "generation").

In some embodiments, applying evolution strategies to reinforcement learning may require running episodes in succession. As such, if $t_{ep}$ is the episode length, every $t_{ep}$, episode return is saved and the neural network parameters are changed for a new population member to be evaluated. At the end of the population, the distribution parameters are updated and a new population of parameter sets is generated.

The method 200 may be performed continuously during operation of the system, allowing the machine-learning model 206 to adapt to changing situations, such as faulty equipment, or unknown dynamics. An automatic convergence detection may be applied to method 200 if deemed preferable for the specific use case. If so, a stop condition is defined base on the performance of the machine learning model and its evolution over time. Here, the performance of the machine learning model specifically refers to the performance of mean of the evolution strategy population, i.e. without taking exploration into account.

The performance metric may, for example, be a difference between evaluation and running average, running average evolution or mean evaluation change. The stop condition may be calculated based on a moving average (e.g. of evaluation score or evaluation score step size) to detect convergence. Larger windows for the average reduce noise in the signal but introduce a delay. As an example, the performance metric may comprise a mean attitude and rate, tracked over a window of 2 hours.

In some embodiments, the performance is evaluated based on a machine-learning model with parameters equal to an average of the sets of parameters in the population for the generation. A controller using such a machine-learning model may be used for two episodes; the first episode to reach a steady state to maximize the quality of the evaluation, the second one to record total return and other performance metrics. The performance recorded during that second episode may be used as a proxy to evaluate converged performance.

FIG. 3 shows a schematic overview of an evolution strategy for training a machine-learning model.

During a sampling phase 302, a plurality of sets of parameters, x, for machine-leaning model are sampled from a current distribution 304 (indicated in the sampling phase by the solid circle). Each set of parameters (shown as the dots) defines a respective instance of the machine-leaning model, and collectively the sets of parameters define a population of parameter sets for the machine-learning model. Each parameter set may, for example, comprise a set of weights and/or biases for a neural network. In general, a population size of $\lambda > 1$ sets of parameters are sampled. For example, the population size, $\lambda$, may be between 16 and 128, for example 32 or 64.

The distribution may be defined as:

$$x \sim x_{mean} + \sigma \times \mathcal{N}(0, C)$$

where $x_{mean}$ is the current mean of the distribution (representing a current "best guess" of the parameters of the machine-learning model, x), $\sigma$ is a current step-size for the evolution algorithm, which guides the speed of learning and the scale of sampling, $\mathcal{N}$ is the normal distribution and C is a covariance matrix, which defines the shape of the distribution and dictates in which direction the exploration should be performed.

Following the evaluation of the sampled machine-learning model parameter sets, an estimation phase 306 is performed in which the $\mu$ top performing parameter sets (indicated by the remaining dots) are selected for use in updating the distribution, where $\mu \leq \lambda$. For example, the top performing $\lambda/2$ or $\lambda/4$ machine-learning model parameter sets may be selected. An estimation algorithm (also referred to herein as an "update rule") may be used to estimate updated parameters of the distribution based on the selected sets of parameters. The $\mu$ parameter is called the parent number. Different evolution strategy algorithms may use different update rules for one or more of the three parameters defining the distribution, $x_{mean}$, $\sigma$ and C. For example, the Covariance Matrix Adaptation Evolution Strategy (CMA-ES) algorithm may be used. CMA-ES is described in detail in "The CMA Evolution Strategy: A Tutorial" (Nikolaus Hansen, arXiv 1604.00772).

In some implementations, a simplified CMA-ES algorithm may be used. In this algorithm, the mean, $x_{mean}$, and step size, $\sigma$, are updated, but the covariance matrix remains fixed, for example fixed as the identity matrix. This drastically reduces the computational cost (in terms of speed and memory requirements) of performing the evolutionary algorithm, but maintains comparable learning performance. This makes it feasible to run on-board satellites, which typically have limited computational hardware and power.

As an example, assuming the machine-learning model has roughly 2000 parameters (e.g. an order 8 HORNN with layer size 16), the RAM usage for a full covariance matrix will require a few hundred megabytes of RAM. This is the dominant factor in memory usage. When fixing the covariance matrix to be the identity matrix, the dominant matrix will be the population matrix, containing the parameters of the sampled machine-learning models. For a population size of 64, this will be only a few megabytes, which will easily fit into the memory typically contained on-board a satellite.

To update the mean, an average set of parameters of the $\mu$ best performing machine-learning model parameter sets (as measured by the reward function) may be taken, where $\mu$ is less than the population size. In general, a weighted average of the sets of parameters may be given by:

$$x_{mean}^{(g+1)} = \sum_{i=1}^{\mu} w_i x_{i,sorted}^{(g)}$$

Where $x_{mean}^{(g+1)}$ is the average set of parameters, $\{w_i\}$ are the weights and $\left\{ x_{i,sorted}^{(g)} \right\}$ are the sets of parameters for the $\mu$ top performing machine-learning models.

In some embodiments, the weighting may be uniform, i.e. $w_i = \frac{1}{\mu} \, \forall \, i$. Alternatively, higher performing sets of parameters for the machine-learning model may be weighted more highly in the weighted average. Some embodiments may assign weights to the entire population (not only the top $\mu$), with some weights being negative. In some embodiments, a much larger weighting may be applied to the very best solutions. For example, the weights may be given by:

$$w_i = \frac{w_i'}{\sum w_i}$$

where

$$w_i' = \log\left(\mu + \frac{1}{2}\right) - \log(i)$$

The step size may be updated with the goal of optimising the evolution path. The goal may be to match the step size to the average observed step size. The initial step size may be chosen to assist learning. Higher values are required for the system to learn at all but they cause loss of observed performance during training. If the value is far too high the learning will be quite unstable. In some embodiments, the initial values is between 0.03 and 0.05.

In some embodiments, the step size update is based on an evolution path, $p_\sigma$. The evolution path is the vector sum of the steps performed by the agent in the exploration or the search space in consecutive generations.

In some embodiments, the evolution path for a generation (g+1) may be derived from the evolution path at generation (g) using:

$$p_\sigma^{(g+1)} = (1 - c_\sigma)p_\sigma^{(g)} + \sqrt{c_\sigma(2 - c_\sigma)\mu_{eff}}\left(C^{(g)}\right)^{-\frac{1}{2}}\frac{x_{mean}^{(g+1)} - x_{mean}^{(g)}}{\sigma^{(g)}}$$

$$\sigma^{(g+1)} = \sigma^{(g)} \exp\left(\frac{c_\sigma}{d_\sigma}\left(\frac{\left\|p_\sigma^{(g+1)}\right\|}{E\|\mathcal{N}(0,1)\|} - 1\right)\right)$$

where $\mu_{eff}$ is the variance effective selection mass, $c_\sigma$ is the evolution path step size and $d_\sigma$ is a normalisation parameter.

The variance effective section may, in some embodiments, it may be given by:

$$\mu_{eff} = \left(\sum_{i=1}^{\mu} w_i^2\right)^{-1}$$

where $w_i$ are the weights of the mean set of parameters $x_{mean}$.

The evolution path step size controls the size of the evolution path step. In some embodiments, it may be given by:

$$c_\sigma = \frac{\mu_{eff} + 2}{N + \mu_{eff} + 5}$$

where N is the number of parameters of the machine-learning model, i.e. the dimension of $x$. In some implementations, a value of between 1/N and 1/$\sqrt{N}$ may be used.

The normalisation parameter may be given by:

$$d = 1 + 2\,max\left(0, \sqrt{\frac{\mu_{eff} - 1}{N + 1}} - 1\right) + c_\sigma$$

Furthermore, in some embodiments the step size may undergo a decay at each generation. In other words, the step size is multiplied by a parameter smaller than 1, $\sigma_{decay}$, at every new generation. This makes sure the step size will decrease over time, forcing the network to converge. This is particularly useful when training online as the goal is to eventually stop exploring and use best available policy. It also avoids the noise of the exploration to prevent fine-tuning the policy. The multiplicative factor may be between 0.9 and 1, for example 0.992.

A new/updated distribution 308 is defined based on the determined updated parameters. The updated distribution may have an updated mean and an updated step size. In the example shown, the updated distribution also has an updated covariance matrix, though as discussed above these may not be the case in all embodiments. A new population of parameter sets for the machine-learning model is then sampled from the new/updated distribution.

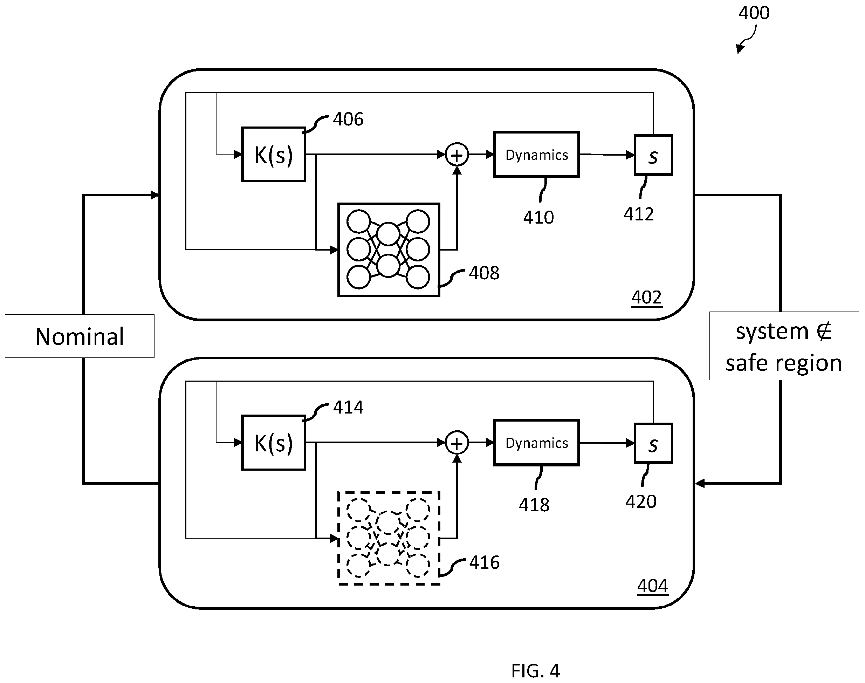

FIG. 4 shows a schematic overview of an example method 400 of runtime assurance for a satellite. Run-time assurance strategy is a method for employment in mission- or safety-critical systems where neural networks or other AI models are employed. The basis is a monitor algorithm that checks the behaviour of the AI component and the system in general and a supervisor that applies corrective action when unsafe behaviour is detected, e.g. behaviour that would result in the satellite being put into an unstable or unsafe state. The great advantage of such techniques is the fact that these monitors/supervisors can be built similarly to classical FDIR algorithms and can be verified formally so that there is no need to verify the AI component.

The method is based on the use of a reinforcement learning subsystem 402 and a back-up subsystem 404. The reinforcement learning subsystem 402 operates as described above in relation to FIG.s 1 and 2; a current state of the satellite is used by a predetermined control model 406 to generate an initial set of control parameters, which are then modified based on the output of a machine-learning model 408 to generate an updated set of control parameters. The updated set of parameters are used to control 410 the satellite, and an updated state 412 of the satellite is obtained.

The back-up subsystem 404 comprises a control subsystem that configured to generate control signals for returning the satellite to a "safe" state, i.e. a state within a predefined safe range of states. The back-up subsystem 404 may comprise a control system that has been verified formally. In some embodiments, the back-up subsystem $_{404}$ comprises a robust controller 414. The robust controller 414 may be identical to the predetermined control model 406 of the reinforcement learning subsystem 402. The robust controller 414 may be a linear controller. In some embodiments, it may comprise a verified machine-learning model 416 configured to apply modifications to the output of the robust controller 414, as described in relation to FIG. 1. The satellite is controlled 418 based on the resulting control parameters, and an updated state 420 of the satellite obtained.

During operation of the system, a monitoring subsystem/algorithm (not shown) monitors the state of the satellite and/or the performance of the control of the satellite, and switches between use of the reinforcement learning subsystem 402 and back-up subsystem 404 based on the current state of the satellite. When the satellite is being controlled using the reinforcement learning subsystem 402, the monitoring algorithm checks the current state of the satellite and/or the control parameters output by the reinforcement learning subsystem 402 against one or more threshold parameters values or threshold ranges that define a safe region of the satellite. If the current state of the satellite and/or the control parameters fall within the safe region, then the satellite is controlled by the reinforcement learning subsystem 402 at the next time step. If the current state of the satellite and/or the control parameters fall outside the safe region, then control of the system is switched to a safe mode in which the verified supervisor subsystem 404 controls the satellite until the satellite is returned to the safe region and/or behaving nominally.

An important aspect in defining runtime assurance is the boundaries of the safe region, from which the switching condition is defined. By selecting appropriate boundaries it may be possible, to demonstrate the safety of the system formally. Coupled with an exhaustive verification process, this can bring strong confidence in the safety and performance of the RL algorithm when applied to mission-critical systems in a satellite.

The safe region may be defined by one or more threshold state values or ranges of state values. The safe region may be defined by one or more of: a threshold attitude error; a threshold rate of change on the attitude; a threshold roll rate; a range of allowed reaction wheel momenta; a range of allowed angular momentum; or the like.

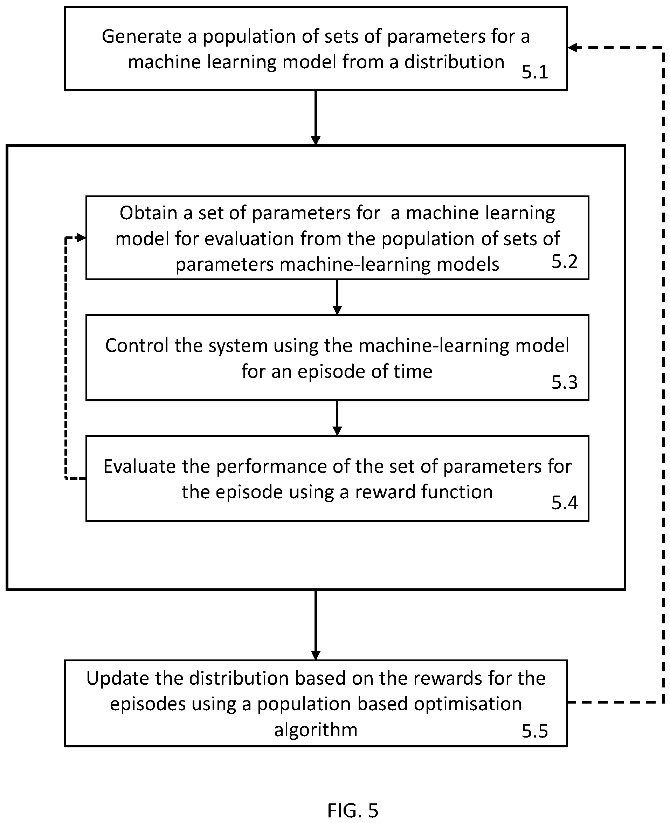

FIG. 5 shows a flow diagram of an example method for training a machine-learning model to adapt control signals for a satellite that are output from a control model. The method may be performed by one or more processors of a computing system. The computing system may form a part of a satellite.

At operation 5.1, a plurality of sets of parameters for a machine-learning model are sampled from a parameter distribution. Collectively, the plurality of sets of parameters for the machine-learning model may be referred to as a population of parameter sets. The parameters may comprise, for example, weights and/or biases of a neural network.

In some implementations, the machine-learning model comprises one or more neural networks. The neural networks may comprise one or more recurrent layers, either gated or non-gated. For example, the neural networks may comprise one or more LSTM layers, or one or more HORNN layers. The neural networks may alternatively or additionally comprise one or more fully connected layers.

At operation 5.2, a set of machine-learning model parameters is obtained from the population of parameter sets.

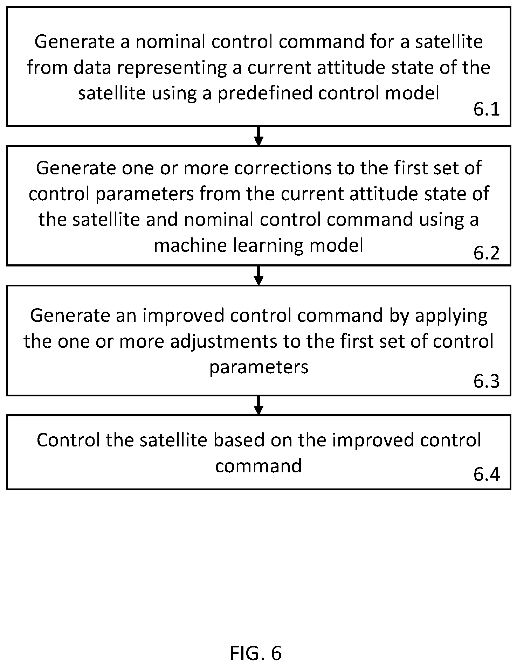

At operation 5.3, parameters in the obtained set of machine-learning model parameters are used to define a respective variation/instance of the machine-learning model. The variation/instance of the machine-learning model is used to control the satellite for an episode of time, for example as described in relation to FIG. 6.

At operation 5.4, the performance of the set of parameters for machine-learning model for the episode is evaluated using a reward function, r. The type of reward function used depends on the task the agent is being trained on.

Where the task relates to the stability of the agent, the reward may penalise fast changes in one or more variables of the state of the agent. For example, where the system the agent is acting on is a satellite, the reward may penalise fast changes in the attitude of the satellite. An example of such a reward is given by:

$$r = \begin{cases} 1 - \alpha|\dot{\theta}| & |\theta| < \theta_{max} \\ 0 & |\theta| \geq \theta_{max} \end{cases}$$

where $\theta$ is the attitude of the satellite, $\theta_{max}$ is a threshold attitude and $\alpha$ is a constant.

Operations 5.2 to 5.4 are repeated until each of the parameter sets in the population have been evaluated. Each parameter set is evaluated on a different episode of time. Once all of the parameter sets in the population have been evaluated, the method proceeds to operation 5.4.

At operation 5.4, the population of parameter sets is updated based on the determined rewards for the machine-learning models. The method then returns to operation 5.1.

A metaheuristic update algorithm may be used to determine the updates, such as a population-based update algorithm. An evolution strategy may be used to determine the updates, for example as described above in relation to FIG. 3. The evolution strategy may comprise updating the distribution of machine-learning model parameters based on the determined rewards. The distribution of model parameters may depend on an average value, $x_{mean}$, a step size, $\sigma$, and/or a covariance matrix, C. The distribution may be a normal distribution in N-dimensions, where N is the number of parameters of the machine-learning model.

Updating the distribution may comprise determining an average set of parameter values of a plurality of parameter sets, and determining the updated distribution at least in part based on the average set of parameter values. The average set of parameter values may comprise an average (e.g. a mean) of the top $\mu$ performing machine-learning models, i.e. the $\mu$ models with the highest reward values, where $\mu$ is less than the population size. The average may comprise a weighted average/sum of the parameter sets, where the weights are based at least in part on the reward value for each parameter set included in the sum. Parameter sets with a higher reward value are weighted more highly in the weighted average. In some embodiments, all parameter sets are used in the weighted average, while in others only the $\mu$ models with the highest reward values are used. For example, the average value of the distribution may be to the average set of parameter values. Furthermore, the step size may be updated based on the average set of parameter values.

FIG. 6 shows a flow diagram of an example method of controlling a satellite using a machine-learning model.

At operation 6.1, a nominal control command, e.g. a first set of control parameters, for the satellite is generated from data representing a current attitude state of the satellite using a nominal control model, e.g. a predefined control model.

At operation 6.2, one or more adjustments to the nominal control command are generated from the current attitude state of the satellite and the nominal control command using the machine-learning model.

At operation 6.3, an improved control command, e.g. a second set of control parameters, is obtained by applying the one or more adjustments to the nominal control command.

In some embodiments, the improved control command is compared to one or more threshold conditions/values to make sure that improved control command falls within a safe range. If the improved control command falls within the range, it is used in operation 6.4 to control the satellite. If improved control command falls outside their respective safe range, the improved control command may be replaced using a back-up control model. The back-up control model may, for example, be the predefined control model (i.e. the second set of control parameters reverts back to the first set of control parameters) or another predefined control model.

At operation 6.4, the satellite is controlled based on the improved control command. The improved control command may be converted into control signals for controlling one or more elements of the satellite, e.g. thrusters, motors, actuators, electronics or the like. In some examples, multiple actuators are controlled based on the improved control command in order to control the global attitude of the satellite.

An updated state of the satellite may be determined after or during control of the system. The updated sate may comprise an updated attitude state of the satellite. The updated sate may comprise an updated rate of change in attitude of the satellite. The updated sate may comprise an updated roll rate/angular velocity of the satellite.

In some embodiments, the updated state of the satellite is compared to one or more threshold conditions/values and/or predefined acceptable states to make sure that the state of the satellite falls within a safe region, i.e. the satellite state is not in a dangerous state beyond the predefined acceptable state. If the state of the satellite is within the safe region, then the method proceeds to the next iteration with the updated state used as input. If the state lies outside the safe region, the satellite may switch to using a back-up control model until the satellite is returned to the safe region. The back-up control model may, for example, be the predefined control model (i.e. the second set of control parameters reverts back to the first set of control parameters) or another predefined control model.

The systems and methods disclosed herein have been described in the context of a satellite. However, it will be appreciated that they are also applicable to other systems that use RL when interacting with a real world environment. For example, the systems and methods disclosed herein may be applied to autonomous vehicles more generally, other spacecraft, or control systems, such as robots. The systems and method described herein are particularly beneficial when implemented on systems with limited computational ability, e.g. constrained memory spaces, and/or in mission critical systems.

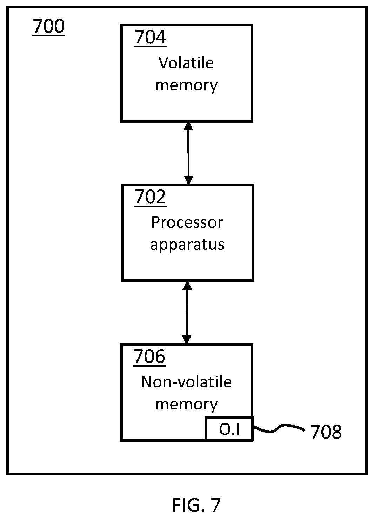

Figure 7 shows a schematic example of a system/apparatus for performing any of the methods described herein. The system/apparatus shown is an example of a computing device. It will be appreciated by the skilled person that other types of computing devices/systems may alternatively be used to implement the methods described herein, such as a distributed computing system. One or more of these systems/apparatus may be used to perform the methods described herein. The system/apparatus may form a subsystem of wider system, e.g. a computing subsystem of a satellite.

The apparatus (or system) 700 comprises one or more processors 702. The one or more processors control operation of other components of the system/apparatus 700. The one or more processors 702 may, for example, comprise a general-purpose processor. The one or more processors 702 may be a single core device or a multiple core device. The one or more processors 702 may comprise a Central Processing Unit (CPU) or a Graphical Processing Unit (GPU). Alternatively, the one or more processors 902 may comprise specialised processing hardware, for instance a RISC processor or programmable hardware with embedded firmware. Multiple processors may be included.

The system/apparatus comprises a working or volatile memory 704. The one or more processors may access the volatile memory 704 in order to process data and may control the storage of data in memory. The volatile memory 704 may comprise RAM of any type, for example, Static RAM (SRAM), Dynamic RAM (DRAM), or it may comprise Flash memory, such as an SD-Card.

The system/apparatus comprises a non-volatile memory 706. The non-volatile memory 706 stores a set of operation instructions 708 for controlling the operation of the processors 702 in the form of computer readable instructions. The non-volatile memory 706 may be a memory of any kind such as a Read Only Memory (ROM), a Flash memory or a magnetic drive memory.

The one or more processors 702 are configured to execute operating instructions 708 to cause the system/apparatus to perform any of the methods described herein. The operating instructions 708 may comprise code (i.e. drivers) relating to the hardware components of the system/apparatus 700, as well as code relating to the basic operation of the system/apparatus 700. Generally speaking, the one or more processors 702 execute one or more instructions of the operating instructions 708, which are stored permanently or semi-permanently in the non-volatile memory 706, using the volatile memory 704 to store temporarily data generated during execution of said operating instructions 708.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to FIG. 9, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

The various example embodiments described herein are described in the general context of method steps or processes, which may be implemented in one aspect by a computer program product, embodied in a computer-readable medium, including computer-executable instructions, such as program code, executed by computers in networked environments. A computer readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the foregoing specification, embodiments have been described with reference to numerous specific details that can vary from implementation to implementation. Certain adaptations and modifications of the described embodiments can be made. Other embodiments can be apparent to those skilled in the art from consideration of the specification and practice of the invention disclosed herein. It is also intended that the sequence of steps shown in figures are only for illustrative purposes and are not intended to be limited to any particular sequence of steps. As such, those skilled in the art can appreciate that these steps may be performed in a different order while implementing the same method.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the example embodiments presented herein.

**EP 4 408 749 B1**

**Claims**

1. A computer implemented method (200) for controlling a global attitude of a satellite comprising:

   for at least one machine learning model (206) and one predefined nominal control model (208) able to generate a nominal control command which is operational for controlling at least the attitude of the satellite:

   controlling the satellite for an episode of time, the controlling comprising:

   determining (6.1), by one or more processors of the satellite, the nominal control command for the satellite from data representing a current attitude state of the satellite which are processed using the predefined nominal control model;
   generating (6.2), by the one or more processors and using said machine learning model, one or more corrections to said nominal control command from the current attitude state of the satellite and said nominal control command;
   generating (6.3), by the one or more processors, an improved control command (210) by applying said correction to said nominal control command; and
   controlling (6.4) the satellite based on said improved control command; and

   evaluating, by the one or more processors, a performance of the improved control commands, for said episode of time, using a reward function (212) providing rewards; and

   after each episode of time, updating (204), by the one or more processors, said machine learning model based on the rewards, **characterised in that** updates are determined using a metaheuristic optimisation algorithm, wherein determining the updates using the metaheuristic optimisation algorithm comprises:

   generating a plurality of sets of parameters for the at least one machine learning model from a distribution of model parameters, each set of parameters corresponding to a distinct variation of the at least one machine learning model, wherein the distribution of model parameters is based on a step size describing the size of the distribution and a covariance matrix describing the shape of the distribution;
   determining a plurality of best performing variations of the at least one machine learning model;
   determining an average set of parameters of the best performing variations of the at least one machine learning model;
   updating the distribution of model parameters based on the determined average set of parameters; and
   sampling an updated plurality of sets of parameters of the at least one machine learning model from the updated distribution.

2. The method of any preceding claim, further comprising a run-time assurance strategy, the run-time assurance strategy comprising:

   monitoring the current attitude state of the satellite and/or said performance , for at least one dangerous state beyond predefined acceptable states; and
   in response to detecting said dangerous state, switching control of the satellite to a verified mode in which the satellite is directly controlled by said nominal control command in a verified control model in which the aforementioned machine learning model is disabled.

3. The method of any preceding claim, wherein updating the distribution of model parameters further comprises updating the step size based on the best performing variations of the at least one machine learning model.

4. The method of any preceding claim, wherein updating the distribution of model parameters further comprises applying a decay to the step size based on a decay parameter.

5. The method of any preceding claim, wherein the reward penalises fast changes in one or more attitude state variables of the satellite.

6. The method of any preceding claim, wherein the machine-learning model is a non-gated recurrent neural network.

7. The method of claim 6, wherein the non-gated recurrent neural network comprises one or more higher order recurrent neural network layers and followed by one or more fully connected layers.

8. The method of any preceding claim, wherein evaluating the performance of the effective control commands for the episode using a reward function providing rewards is based at least in part on an attitude state of the satellite comprising one or more of: an attitude; an attitude rate; and/or a roll rate of at least a part of the satellite.

9. The method of claim 8, wherein the reward function is given by:

$$r = \begin{cases} 1 - \alpha|\dot{\theta}|, & |\theta| \leq \theta_{max} \\ 0, & |\theta| \geq \theta_{max} \end{cases}$$

where $\theta$ is an attitude of the satellite, $\theta_{max}$ is a threshold attitude and $\alpha$ is a constant.

10. A computer implemented system for controlling a global attitude of a satellite comprising at least one predefined nominal control model (208) able to generate a nominal control command which is operational for controlling at least the attitude of the satellite, wherein the system further comprises at least one machine learning model (210) and one or more actuators for adjusting the global attitude of the satellite, wherein for at least one episode of time:

one or more processors of the satellite are able to determine the nominal control command for the satellite, from data representing a current attitude state of the satellite which are processed using said predefined nominal control model;
the one or more processors and said machine learning model, are able to generate one or more corrections to said nominal control command, from the current attitude state of the satellite and said nominal control command;
the one or more processors are able to generate an improved control command by applying said correction to said nominal control command, the improved control command being used for controlling the satellite; and
the one or more processors are able to evaluate a performance of the improved control commands, for said episode of time, using a reward function providing rewards; and
after each episode of time, the one or more processors is able to update said machine learning model based on the rewards, **characterised in that** updates are determined using a metaheuristic optimisation algorithm, wherein determining the updates using the metaheuristic optimisation algorithm comprises:

generating a plurality of sets of parameters for the at least one machine learning model from a distribution of model parameters, each set of parameters corresponding to a distinct variation of the at least one machine learning model, wherein the distribution of model parameters is based on a step size describing the size of the distribution and a covariance matrix describing the shape of the distribution;
determining a plurality of best performing variations of the at least one machine learning model;
determining an average set of parameters of the best performing variations of the at least one machine learning model;
updating the distribution of model parameters based on the determined average set of parameters; and
sampling an updated plurality of sets of parameters of the at least one machine learning model from the updated distribution.

11. A satellite comprising:

the computer implemented system of claim 10,
one or more sensors for determining a current state of the satellite; and
one or more sub-systems for controlling the satellite based on the one or more effective control commands.

12. A computer program product comprising computer readable instructions that, where executed by the system of claim 10, causes the system to perform the method of any of claims 1-9.

**Patentansprüche**

1. Computerimplementiertes Verfahren (200) zum Steuern einer globalen Lage eines Satelliten, umfassend:
für mindestens ein maschinelles Lernmodell (206) und ein vordefiniertes nominales Steuermodell (208), das fähig ist, einen nominalen Steuerbefehl zu erzeugen, der zum Steuern mindestens der Lage des Satelliten betriebsbereit ist:

Steuern des Satelliten für eine bestimmte Zeitspanne, wobei das Steuern Folgendes umfasst:

Bestimmen (6.1) des nominalen Steuerbefehls für den Satelliten durch einen oder mehrere Prozessoren des Satelliten aus Daten, die einen aktuellen Lagezustand des Satelliten darstellen, die mithilfe des vordefinierten nominalen Steuermodells verarbeitet werden;

Erzeugen (6.2) einer oder mehrerer Korrekturen an dem nominalen Steuerbefehl aus dem aktuellen Lagezustand des Satelliten und dem nominalen Steuerbefehl durch den einen oder die mehreren Prozessoren und mithilfe des maschinellen Lernmodells;

Erzeugen (6.3) eines verbesserten Steuerbefehls (210) durch den einen oder die mehreren Prozessoren durch Anwenden der Korrektur auf den nominalen Steuerbefehl; und

Steuern (6.4) des Satelliten basierend auf dem verbesserten Steuerbefehl; und

Auswerten einer Leistung der verbesserten Steuerbefehle für die Zeitspanne durch den einen oder die mehreren Prozessoren mithilfe einer Belohnungsfunktion (212), die Belohnungen bereitstellt; und

Aktualisieren (204) des maschinellen Lernmodells nach jeder Zeitspanne durch den einen oder die mehreren Prozessoren basierend auf den Belohnungen, **dadurch gekennzeichnet, dass** die Aktualisierungen mithilfe eines metaheuristischen Optimierungsalgorithmus bestimmt werden, wobei das Bestimmen der Aktualisierungen mithilfe des metaheuristischen Optimierungsalgorithmus Folgendes umfasst:

Erzeugen einer Vielzahl von Sätzen von Parametern für das mindestens eine maschinelle Lernmodell aus einer Verteilung von Modellparametern, wobei jeder Satz von Parametern einer eindeutigen Variante des mindestens einen maschinellen Lernmodells entspricht, wobei die Verteilung der Modellparameter auf einer Schrittgröße, die die Größe der Verteilung beschreibt, und einer Kovarianzmatrix, die den Verlauf der Verteilung beschreibt, basiert;

Bestimmen einer Vielzahl von leistungsstärksten Varianten des mindestens einen maschinellen Lernmodells;

Bestimmen eines durchschnittlichen Satzes von Parametern der leistungsstärksten Varianten des mindestens einen maschinellen Lernmodells;

Aktualisieren der Verteilung der Modellparameter basierend auf dem bestimmten durchschnittlichen Satz von Parametern; und

Abtasten einer aktualisierten Vielzahl von Sätzen von Parametern des mindestens einen maschinellen Lernmodells aus der aktualisierten Verteilung.

2. Verfahren nach einem der vorhergehenden Ansprüche, ferner umfassend eine Laufzeitsicherungsstrategie, wobei die Laufzeitsicherungsstrategie Folgendes umfasst:

Überwachen des aktuellen Lagezustands des Satelliten und/oder der Leistung auf mindestens einen gefährlichen Zustand jenseits der vordefinierten zulässigen Zustände; und

Umschalten einer Steuerung des Satelliten in einen verifizierten Modus, in dem der Satellit direkt durch den nominalen Steuerbefehl in einem verifizierten Steuerungsmodell gesteuert wird, in dem das vorher genannte maschinelle Lernmodell deaktiviert ist, als Reaktion auf das Erkennen des gefährlichen Zustands.

3. Verfahren nach einem der vorhergehenden Ansprüche, wobei das Aktualisieren der Verteilung der Modellparameter ferner ein Aktualisieren der Schrittgröße basierend auf den leistungsstärksten Varianten des mindestens einen maschinellen Lernmodells umfasst.

4. Verfahren nach einem der vorhergehenden Ansprüche, wobei das Aktualisieren der Verteilung der Modellparameter ferner ein Anwenden einer Abnahme auf die Schrittgröße basierend auf einem Abnahmeparameter umfasst.

5. Verfahren nach einem der vorhergehenden Ansprüche, wobei die Belohnung schnelle Änderungen in einer oder mehreren Lagezustandsvariablen des Satelliten bestraft.

6. Verfahren nach einem der vorhergehenden Ansprüche, wobei das maschinelle Lernmodell ein nicht geschlossenes rekurrentes neuronales Netzwerk ist.

7. Verfahren nach Anspruch 6, wobei das nicht geschlossene rekurrente neuronale Netzwerk eine oder mehrere rekurrente neuronale Netzwerkschichten höherer Ordnung und gefolgt von einer oder mehreren vollständig verbundenen Schichten umfasst.

**8.** Verfahren nach einem der vorhergehenden Ansprüche, wobei das Auswerten der Leistung der effektiven Steuerbefehle für die Spanne mithilfe einer Belohnungsfunktion, die Belohnungen bereitstellt, mindestens teilweise auf einem Lagezustand des Satelliten basiert, umfassend mindestens eines oder mehrere von Folgendem: einer Lage; einer Lagenrate; und/oder einer Rollrate mindestens eines Teils des Satelliten.

**9.** Verfahren nach Anspruch 8, wobei die Belohnungsfunktion durch Folgendes gegeben ist:

$$r = \begin{cases} 1 - \alpha |\dot{\theta}|, & |\theta| \leq \theta_{max} \\ 0, & |\theta| \geq \theta_{max} \end{cases}$$

wobei $\theta$ eine Lage des Satelliten, $\theta_{max}$ eine Schwellenlage und $\alpha$ eine Konstante ist.

**10.** Computerimplementiertes System zum Steuern einer globalen Lage eines Satelliten, umfassend mindestens ein vordefiniertes nominales Steuermodell (208), das fähig ist, einen nominalen Steuerbefehl zu erzeugen, der zum Steuern mindestens der Lage des Satelliten betriebsbereit ist, wobei das System ferner mindestens ein maschinelles Lernmodell (210) und einen oder mehrere Aktuatoren zum Einstellen der globalen Lage des Satelliten umfasst, wobei für mindestens eine Zeitspanne:

ein oder mehrere Prozessoren des Satelliten fähig sind, den nominalen Steuerbefehl für den Satelliten aus Daten zu bestimmen, die einen aktuellen Lagezustand des Satelliten darstellen, die mithilfe des vordefinierten nominalen Steuermodells verarbeitet werden;
der eine oder die mehreren Prozessoren und das maschinelle Lernmodell fähig sind, aus dem aktuellen Lagezustand des Satelliten und dem nominalen Steuerbefehl eine oder mehrere Korrekturen an dem nominalen Steuerbefehl zu erzeugen;
der eine oder die mehreren Prozessoren fähig sind, durch Anwenden der Korrektur auf den nominalen Steuerbefehl einen verbesserten Steuerbefehl zu erzeugen, wobei der verbesserte Steuerbefehl zum Steuern des Satelliten verwendet wird; und
der eine oder die mehreren Prozessoren fähig sind, mithilfe einer Belohnungsfunktion, die Belohnungen bereitstellt, eine Leistung der verbesserten Steuerbefehle für die Zeitspanne auszuwerten; und
der eine oder die mehreren Prozessoren nach jeder Zeitspanne fähig sind, das maschinelle Lernmodell basierend auf den Belohnungen zu aktualisieren, **dadurch gekennzeichnet, dass** die Aktualisierungen mithilfe eines metaheuristischen Optimierungsalgorithmus bestimmt werden, wobei das Bestimmen der Aktualisierungen mithilfe des metaheuristischen Optimierungsalgorithmus Folgendes umfasst:

Erzeugen einer Vielzahl von Sätzen von Parametern für das mindestens eine maschinelle Lernmodell aus einer Verteilung von Modellparametern, wobei jeder Satz von Parametern einer eindeutigen Variante des mindestens einen maschinellen Lernmodells entspricht, wobei die Verteilung der Modellparameter auf einer Schrittgröße, die die Größe der Verteilung beschreibt, und einer Kovarianzmatrix, die den Verlauf der Verteilung beschreibt, basiert;
Bestimmen einer Vielzahl von leistungsstärksten Varianten des mindestens einen maschinellen Lernmodells;
Bestimmen eines durchschnittlichen Satzes von Parametern der leistungsstärksten Varianten des mindestens einen maschinellen Lernmodells;
Aktualisieren der Verteilung der Modellparameter basierend auf dem bestimmten durchschnittlichen Satz von Parametern; und
Abtasten einer aktualisierten Vielzahl von Sätzen von Parametern des mindestens einen maschinellen Lernmodells aus der aktualisierten Verteilung.

**11.** Satellit, umfassend:

das computerimplementierte System nach Anspruch 10,
einen oder mehrere Sensoren zum Bestimmen eines aktuellen Zustands des Satelliten; und
ein oder mehrere Subsysteme zum Steuern des Satelliten basierend auf den einen oder mehreren effektiven Steuerbefehlen.

**12.** Computerprogrammprodukt, umfassend computerlesbare Anweisungen, die, wenn sie von dem System nach Anspruch 10 ausgeführt werden, das System dazu veranlassen, das Verfahren nach einem der Ansprüche 1 bis 9 durchzuführen.

**Revendications**

1. Procédé mis en œuvre par ordinateur (200) de commande d'une attitude globale d'un satellite comprenant :
pour au moins un modèle d'apprentissage automatique (206) et un modèle de commande nominale prédéfini (208) capable de générer une consigne de commande nominale qui est opérationnelle pour commander au moins l'attitude du satellite :
le commande du satellite pendant un épisode de temps, la commande comprenant :

la détermination (6.1), par un ou plusieurs processeurs du satellite, la consigne de commande nominale du satellite à partir de données représentant un état d'attitude actuel du satellite qui sont traitées à l'aide du modèle de commande nominale prédéfini ;
la génération (6.2), par les un ou plusieurs processeurs et l'utilisation dudit modèle d'apprentissage automatique, d'une ou plusieurs corrections à ladite consigne de commande nominale à partir de l'état d'attitude actuel du satellite et de ladite consigne de commande nominale ;
la génération (6.3), par les un ou plusieurs processeurs, d'une consigne de commande améliorée (210) en appliquant ladite correction à ladite consigne de commande nominale ; et
la commande (6.4) du satellite sur la base de ladite consigne de commande améliorée ; et
l'évaluation, par les un ou plusieurs processeurs, d'une performance des consignes de commande améliorées, pour ledit épisode de temps, à l'aide d'une fonction de récompense (212) fournissant des récompenses ; et
après chaque épisode de temps, la mise à jour (204), par les un ou plusieurs processeurs, dudit modèle d'apprentissage automatique sur la base des récompenses, **caractérisé en ce que** les mises à jour sont déterminées à l'aide d'un algorithme d'optimisation métaheuristique, dans lequel la détermination des mises à jour à l'aide de l'algorithme d'optimisation métaheuristique comprend :

la génération d'une pluralité d'ensembles de paramètres pour l'au moins un modèle d'apprentissage automatique à partir d'une distribution de paramètres de modèle, chaque ensemble de paramètres correspondant à une variation distincte des un ou plusieurs modèles d'apprentissage automatique, dans lequel la distribution de paramètres de modèle est basée sur une taille de pas décrivant la taille de la distribution et une matrice de covariance décrivant la forme de la distribution ;
la détermination d'une pluralité de variations les plus performantes de l'au moins un modèle d'apprentissage automatique ;
la détermination d'un ensemble moyen de paramètres des variations les plus performantes de l'au moins un modèle d'apprentissage automatique ;
la mise à jour de la distribution de paramètres de modèle sur la base de l'ensemble moyen déterminé de paramètres ; et
l'échantillonnage d'une pluralité mise à jour d'ensembles de paramètres de l'au moins un modèle d'apprentissage automatique à partir de la distribution mise à jour.

2. Procédé selon une quelconque revendication précédente, comprenant en outre une stratégie d'assurance d'exécution, la stratégie d'assurance d'exécution comprenant :

la surveillance de l'état d'attitude actuel du satellite et/ou desdites performances, pour au moins un état dangereux au-delà des états acceptables prédéfinis ; et
en réponse à la détection dudit état dangereux, la commutation de la commande du satellite en mode vérifié dans lequel le satellite est directement commandé par ladite consigne de commande nominale dans un modèle de commande vérifié dans lequel le modèle d'apprentissage automatique susmentionné est désactivé.

3. Procédé selon une quelconque revendication précédente, dans lequel la mise à jour de la distribution de paramètres de modèle comprend en outre la mise à jour de la taille de pas sur la base des variations les plus performantes de l'au moins un modèle d'apprentissage automatique.

4. Procédé selon une quelconque revendication précédente, dans lequel la mise à jour de la distribution de paramètres de modèle comprend en outre l'application d'une précession à la taille de pas sur la base d'un paramètre de précession.

**5.** Procédé selon une quelconque revendication précédente, dans lequel la récompense pénalise les changements rapides d'une ou plusieurs variables d'état d'attitude du satellite.

**6.** Procédé selon une quelconque revendication précédente, dans lequel le modèle d'apprentissage automatique est un réseau neuronal récurrent non verrouillé.

**7.** Procédé selon la revendication 6, dans lequel le réseau neuronal récurrent non verrouillé comprend une ou plusieurs couches de réseau neuronal récurrent d'ordre supérieur et est suivi d'une ou plusieurs couches entièrement connectées.

**8.** Procédé selon une quelconque revendication précédente, dans lequel l'évaluation des performances des consignes de commande effectives pour l'épisode à l'aide d'une fonction de récompense fournissant des récompenses est basée au moins en partie sur un état d'attitude du satellite comprenant un ou plusieurs des éléments suivants : une attitude ; une vitesse d'attitude ; et/ou une vitesse de roulis d'au moins une partie du satellite.

**9.** Procédé selon la revendication 8, dans lequel la fonction de récompense est donnée par :

$$r = \begin{cases} 1 - \alpha |\dot{\theta}|, & |\theta| \leq \theta_{max} \\ 0, & |\theta| \geq \theta_{max} \end{cases}$$

où $\theta$ est une attitude du satellite, $\theta_{max}$ est une attitude seuil et $\alpha$ est une constante.

**10.** Système mis en œuvre par ordinateur pour commander une attitude globale d'un satellite comprenant au moins un modèle de commande nominale prédéfini (208) capable de générer une consigne de commande nominale qui est opérationnelle pour commander au moins l'attitude du satellite, dans lequel le système comprend en outre au moins un modèle d'apprentissage automatique (210) et un ou plusieurs actionneurs pour ajuster l'attitude globale du satellite, dans lequel pendant au moins un épisode de temps :

un ou plusieurs processeurs du satellite sont capables de déterminer la consigne de commande nominale du satellite, à partir de données représentant un état d'attitude actuel du satellite qui sont traitées à l'aide dudit modèle de commande nominale prédéfini ;
les un ou plusieurs processeurs et ledit modèle d'apprentissage automatique, sont capables de générer une ou plusieurs corrections de ladite consigne de commande nominale, à partir de l'état d'attitude actuel du satellite et de ladite consigne de commande nominale ;
les un ou plusieurs processeurs sont capables de générer une consigne de commande améliorée en appliquant ladite correction à ladite consigne de commande nominale, la consigne de commande améliorée étant utilisée pour commander le satellite ; et
les un ou plusieurs processeurs sont capables d'évaluer une performance des consignes de commande améliorées, pour ledit épisode de temps, à l'aide d'une fonction de récompense fournissant des récompenses ; et
après chaque épisode de temps, les un ou plusieurs processeurs sont capables de mettre à jour ledit modèle d'apprentissage automatique sur la base des récompenses, **caractérisé en ce que** les mises à jour sont déterminées à l'aide d'un algorithme d'optimisation métaheuristique, dans lequel la détermination des mises à jour à l'aide de l'algorithme d'optimisation métaheuristique comprend :

la génération d'une pluralité d'ensembles de paramètres pour l'au moins un modèle d'apprentissage automatique à partir d'une distribution de paramètres de modèle, chaque ensemble de paramètres correspondant à une variation distincte des un ou plusieurs modèles d'apprentissage automatique, dans lequel la distribution de paramètres de modèle est basée sur une taille de pas décrivant la taille de la distribution et une matrice de covariance décrivant la forme de la distribution ;
la détermination d'une pluralité de variations les plus performantes de l'au moins un modèle d'apprentissage automatique ;
la détermination d'un ensemble moyen de paramètres des variations les plus performantes de l'au moins un modèle d'apprentissage automatique ;
la mise à jour de la distribution de paramètres de modèle sur la base de l'ensemble moyen déterminé de paramètres ; et

l'échantillonnage d'une pluralité mise à jour d'ensembles de paramètres de l'au moins un modèle d'apprentissage automatique à partir de la distribution mise à jour.

11. Satellite comprenant :

le système mis en œuvre par ordinateur selon la revendication 10,
un ou plusieurs capteurs destinés à déterminer un état actuel du satellite ; et
un ou plusieurs sous-systèmes destinés à commander le satellite sur la base des une ou plusieurs consignes de commande efficaces.

12. Produit de programme informatique comprenant des instructions lisibles par ordinateur qui, lorsqu'elles sont exécutées par le système selon la revendication 10, amènent le système à réaliser le procédé selon l'une quelconque des revendications 1 à 9.

FIG. 1

EP 4 408 749 B1

FIG. 2

FIG. 3

FIG. 4

Generate a population of sets of parameters for a machine learning model from a distribution    5.1

Obtain a set of parameters for a machine learning model for evaluation from the population of sets of parameters machine-learning models    5.2

Control the system using the machine-learning model for an episode of time    5.3

Evaluate the performance of the set of parameters for the episode using a reward function    5.4

Update the distribution based on the rewards for the episodes using a population based optimisation algorithm    5.5

FIG. 5

Generate a nominal control command for a satellite
from data representing a current attitude state of the
satellite using a predefined control model

6.1

↓

Generate one or more corrections to the first set of
control parameters from the current attitude state of
the satellite and nominal control command using a
machine learning model

6.2

↓

Generate an improved control command by applying
the one or more adjustments to the first set of control
parameters

6.3

↓

Control the satellite based on the improved control
command

6.4

FIG. 6

700

704
Volatile memory

702
Processor apparatus

706
Non-volatile memory

O.I    708

FIG. 7

## REFERENCES CITED IN THE DESCRIPTION

**Patent documents cited in the description**

- US 2017336807 A1

**Non-patent literature cited in the description**

- **R. SU et al.** Deep reinforcement learning method based on DDPG with simulated annealing for satellite attitude control system. *Chinese Automation Congress (CAC)*, 2019, 390-395
- **L. REN et al.** Hierarchical Reinforcement-Learning for Real-Time Scheduling of Agile Satellites. *IEEE Access*, vol. 8, 220523-220532
- **R. SULTANA et al.** Higher Order Recurrent Neural Networks. *arXiv 1605.00064*